# EUROPÄISCHE PATENTSCHRIFT

(11) **EP 1 600 737 B1**
(45) Veröffentlichungstag und Bekanntmachung des Hinweises auf die Patenterteilung: **23.03.2016**
(21) Anmeldenummer: 05010918.0
(22) Anmeldetag: 20.05.2005
(51) Int. Cl.: G01D 5/14, G01D 5/245

(54) **Vorrichtung zur rotativen Winkelmessung**
Apparatus for rotary angle measurement
Dispositif de mesure d'angle de rotation

(30) Priorität: 27.05.2004 DE 102004026476
(43) Veröffentlichungstag der Anmeldung: 30.11.2005
(73) Patentinhaber: ELGO-Electronic GmbH & Co. KG, 78239 Rielasingen (DE)
(72) Erfinder: Essinger, Heiko, 78239 Rielasingen (DE)
(74) Vertreter: Behrmann, Niels

(56) Entgegenhaltungen:
- DE-A1- 4 307 544
- DE-A1- 4 400 616
- US-A- 4 785 242

## Beschreibung

Die vorliegende Erfindung betrifft eine Vorrichtung zur rotativen Winkelmessung nach dem Oberbegriff des Hauptanspruchs.

Eine derartige Vorrichtung ist aus der DE 196 29 611 A1 bekannt und beschreibt eine Anordnung, bei welcher eine exzentrisch gelagerte Scheibe als Steuerscheibe zum Zweck der Winkelmessung mit mindestens zwei seitlich über einen (durch die Exzentrizität) veränderlichen Luftspalt mit der magnetisch leitenden Scheibe zusammenwirkt und so ein einer aktuellen Drehposition der Scheibe relativ zu den Magnetfeldsensoren entsprechendes Winkelsignal erzeugt.

Genauer gesagt weisen die im Rahmen dieser Lösung aus dem Stand der Technik bekannten Magnetfeldsenoren (in weiterem auch genannt: Magnetfelddetektoren) einen Hall-Senor (typischerweise in Chipform) auf, welcher zusammen mit einem sogenannten Vorspannungs- oder Bias-Magneten in einem gemeinsamen (typischerweise magnetisch abschirmenden) Gehäuse sitzt. Der Bias-Magnet erzeugt in der Steuerscheibe einen magnetischen Fluss, welcher wiederum von dem Hallelement abgetastet wird.

Auf diese prinzipielle Weise lässt sich dann in hochauflösender Weise eine (absolute) Winkelmessung der aktuellen Position der Steuerscheibe durchführen, wobei das durch die mindestens zwei Magnetfelddetektoren erzeugte, typischerweise sinusförmige Signal in der Kombination eine Winkelbestimmung über dem gesamten 360°-Umfang der Steuerscheibe ermöglicht. Auch zeichnen sich derartige Vorrichtungen nach dem Stand der Technik durch die Fähigkeit aus, die beabsichtigte Winkelmessung auch mit sehr hohen Drehgeschwindigkeiten (und damit verbundenen hohen Grenzfrequenzen) zu ermöglichen.

Allerdings zeichnet sich die aus dem Stand der Technik bekannte Lösung in der praktischen Realisierung durch eine Reihe von Unzulänglichkeiten aus, welche insbesondere den Gebrauch unter industriellen (d.h. Nicht-Labor-) Bedingungen erschweren und damit die aus der DE 196 29 611 bekannte prinzipielle Lösung nur bedingt geeignet für eine Umsetzung in kommerzielle Produkte machen.

So hat sich insbesondere als nachteilig herausgestellt, dass die in der vorstehend beschriebenen Weise aufgebaute Vorrichtung sich durch ein nachteiliges und die brauchbare Winkelauflösung verminderndes Klirren des von den Magnetfelddetektoren erzeugten Sinus- bzw. Kosinussignals auszeichnet, und generell ist die bekannte Vorrichtung nicht zuletzt durch die nur schlecht kontrollierte Aufprägung des Bias-Magnetfelds auf die Scheibe störanfällig.

Im Ergebnis ist daher das von dem Paar erster Magnetfelddetektoren erzeugte erste Winkelsignal nur begrenzt für eine zuverlässige und hochauflösende Auswertung und Weiterverarbeitung, insbesondere etwa für eine Verwendung im Zusammenhang mit der Winkelerfassung im industriellen Produktionsumfeld (etwa von Werkzeugmaschinen) brauchbar.

Zum weiteren Stand der Technik wird verwiesen auf die DE 44 00 616 A1; hier ist ein magnetischer Positionssensor mit einer zweiteiligen, in einem Magnetfeld liegenden Geberanordnung beschrieben, durch welche Geberanordnung die Positionsänderung eines Objekts in eine Abstandsänderung zu einem weichmagnetischen Flussleitkörper umwandelbar ist. Relativ zu einem Referenzsignal wird die Flussänderung in ein Winkel- bzw. Positionssignal umgesetzt.

Die DE 43 07 544 A1 beschreibt eine Anordnung zur Erfassung der Drehstellung eines Rotationskörpers, bei welchem weichmagnetische, scheibenartige Geberkörper in Abhängigkeit von einer Drehstellung ein magnetisches Feld abschirmen.

Eine zusätzliche Positions-Detektionsanordnung zur Bestimmung relativer und absoluter Winkelpositionen mit einer Mehrzahl von Magnetfeldsensoren ist schließlich in der US 4,785,242 beschrieben.

Aufgabe der vorliegenden Erfindung ist es daher, eine gattungsbildende, beispielsweise aus der DE 196 29 611 bekannte Vorrichtung im Hinblick auf ihre Auswertequalität und damit auch ihre Winkelauflösung zu verbessern, wobei insbesondere eine verbesserte Vorrichtung geschaffen werden soll, welche sich auch für einen Einsatz in industriellen Produktionsumgebungen eignet und reproduzierbare, belastbare Ergebnisse liefert.

Die Aufgabe wird durch die Vorrichtung mit den Merkmalen des Hauptanspruchs gelöst; vorteilhafte Weiterbildungen der Erfindung sind in den Unteransprüchen beschrieben.

So ist erfindungsgemäß vorgesehen, drehstarr (und damit winkelstabil mit der auf herkömmliche Weise berührungslos abgetasteten Steuerscheibe) eine weitere randseitig magnetisierte Scheibe (allerdings bevorzugt konzentrisch) vorzusehen, welche durch ihre randseitige Magnetisierung und im Zusammenwirken mit einem hierzu dezidiert zugeordneten zweiten Magnetfelddetektor eine Möglichkeit schafft, die Auflösung und mithin die Signalqualität der Gesamtanordnung signifikant zu erhöhen. Genauer gesagt bietet das durch den zweiten Magnetfelddetektor erzeugte zweite Winkelsignal, welches bevorzugt im Rahmen der Erfindung periodisch ist (was wiederum durch entsprechende Magnetisierung der zweiten Scheibe erreicht wird) die Möglichkeit, in der Art einer Überlagerung bzw. Parallelauswertung mit dem ersten Winkelsignal zu einem kombinierten Ausgangssignal zu gelangen, welches hochauflösend und in beide Drehrichtungen reproduzierbar ist; dies zudem mit geringem apparativem Aufwand. Dabei ist in ansonsten bekannter Weise das erste Winkelsignal ein Absolutsignal und das zweite Winkelsignal bevorzugt ein Inkrementalsignal, wobei eine herkömmliche Winkelauflösung des ersten Winkelsignals im Bereich zwischen ca. 6 und 13 bit (entsprechend 64 bis ca. 8000 Winkelabschnitte) durch das zweite Winkelsignal um weitere 1 bis 13 bit Auflösung verbessert werden kann; die etwa in industriellen Anwendungen von Resolvern geforderte Auflösung von 1 Million/Umdrehung wird damit signifikant überschritten.

Vorteilhaft wird zu diesem Zweck in ansonsten bekannter Weise als zweiter Magnetfelddetektor ein MR-Sensor eingesetzt, welcher hohe Signalqualität (d.h. niedriges Rauschen und Klirren) mit vertretbarem Kostenaufwand ermöglicht; in gattungsgemäß bekannter Weise werden die ersten Magnetfeldsensoren (welche typischerweise in radialer Richtung um 90° beabstandet sind) als Hall-Sensoren ausgeführt.

Eine bevorzugte Weiterbildung der Erfindung sieht zudem vor, sämtliche Magnetfelddetektoren in ein gemeinsames (bevorzugt manuell handhabbares bzw. einfach beweg- und montierbares) Gehäuse zu integrieren, wobei es sich weiter bevorzugt hier als günstig herausgestellt hat, zum Zusammenwirken mit der Kombination aus Steuerscheibe und zweiter Scheibe das Gehäuse an einem Gehäuseabschnitt mit einer entsprechend dem Krümmungsradius der Scheiben verlaufenden, gekrümmten bzw. abgewinkelten Stirnfläche zu versehen, so dass insoweit geeignete Luftspalten für die berührungslose Magnetfelddetektion durch die Magnetfelddetektoren realisiert werden können.

Geeignet kann dieses Sensorgehäuse (welches weiter bevorzugt neben den Magnetfelddetektoren auch die zugehörige Auswerteelektronik enthält) drahtlos oder drahtgebunden mit nachgeschalteten Aggregaten, z. B. einer Steuereinheit für eine Werkzeugmaschine, kommunizieren, wobei hierfür bevorzugt gängige digitale Schnittstellenprotokolle implementiert werden.

Während im Prinzip jede beliebige inhomogene (d.h. für eine Winkelmessung geeignete) Magnetisierung im Randbereich der zweiten magnetischen Scheibe geeignet ist, so bietet es sich hier im Rahmen der vorliegenden Erfindung als günstig an, diese Magnetisierung periodisch, und weiter bevorzugt sinusförmig oder digital vorzusehen, so dass in ansonsten bekannter Weise über den weiter bevorzugt eingesetzten MR-Sensor ein qualitativ hochwertiges zweites Winkelsignal erzeugt werden kann.

Im Ergebnis entsteht so auf einfache und mit geringem Aufwand zu realisierende Weise eine Vorrichtung zur rotativen Winkelmessung, welche hohe Reproduzierbarkeit und Signalqualität mit sehr hohen Winkelauflösungseigenschaften kombiniert, so dass insbesondere auch für anspruchsvolle Messumgebungen ein geeignetes Instrument zur Verfügung steht.

Dabei ist die Verwendung in industriellen Produktionsumgebungen, etwa als Resolver für Werkzeugmaschinen, besonders geeignet, die vorliegende Erfindung jedoch darauf nicht beschränkt. Vielmehr sind andere, im Rahmen der Erfindung bevorzugte Verwendungsformen der Erfindung die Bereiche Textil- und Druckmaschinen sowie jegliche, eine präzise Absolutmessung einer Antriebswelle verlangende Antriebssysteme.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1:: eine Draufsicht auf die erfindungsgemäße Vorrichtung zur rotativen Winkelmessung gemäß einer ersten bevorzugten Ausführungsform und
- Fig. 2:: eine Seitenansicht auf die Anordnung gemäß Fig. 1.

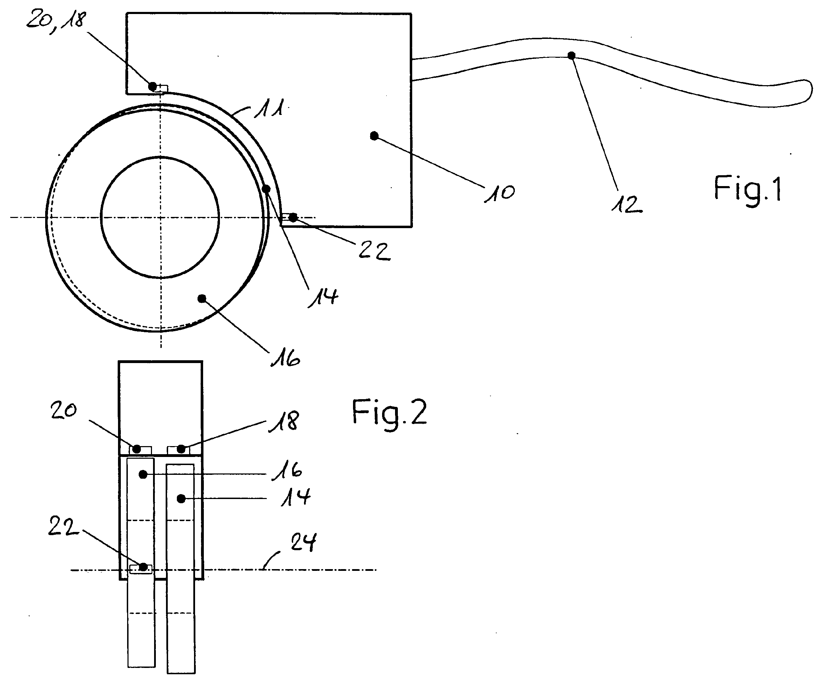

Ein Sensorgehäuse 10 einer i.w. quaderförmigen Kontur besitzt, wie in der Draufsicht der Fig. 1 gezeigt, einen gebogenen Gehäuseabschnitt 11, dessen Stirnfläche ein Paar von magnetisierten Scheiben 14, 16 gegenübersteht. Genauer gesagt ist eine erste, konzentrisch auf einer Rotationsachse 24 gelagerte exzentrische Magnetscheibe 16 in bekannter (und z.B. in der in DE 196 29 611 beschriebenen) Weise als Drehwinkelaufnehmer über die Rotationsachse 24 mit einem nicht gezeigten Drehgeber verbunden und wirkt magnetisch mit einem Paar von gegeneinander um 90° phasenversetzten Hall-Sensoren 20, 22 als ersten Magnetfelddetektoren zusammen, welche sich jeweils endseitig des gekrümmten Gehäuseabschnitts 12 im Gehäuseinneren des Gehäuses 10 befinden.

Diese Hall-Sensoren 20, 22 erfassen bei Rotation der exzentrischen Scheibe 16 die unterschiedlichen Abstände zwischen Scheibenrand und Hall-Sensor 20 bzw. 22 und erzeugen auf diese Weise ein geeignet mit einer Auswerteelektronik im Gehäuse 10 auszuwertendes sinus- bzw. kosinusförmiges Winkelsignal (erstes Winkelsignal im Sinne der Erfindung, Auflösung ca. 6 bis maximal 13 bit).

Ebenfalls starr auf der Rotationsachse 24, allerdings konzentrisch gebohrt, sitzt eine zweite magnetische Scheibe 14, welche randseitig entlang ihres Umfangs mit einer periodischen Magnetisierung, hier einer digitalen Magnetisierung, versehen ist. Diese Magnetisierung wird wiederum berührungslos abgetastet durch einen zweiten Magnetfelddetektor 18, welcher im beschriebenen Ausführungsbeispiel als MR-Magnetfelddetektor ausgebildet ist und im Gehäuse 10 dem ersten Hall-Sensor 20 benachbart vorgesehen ist.

Gemäß der digitalen Magnetisierung der zweiten Scheibe 14 erzeugt der MR-Sensor 18 ein periodisches Ausgangssignal als zweites Winkelsignal (Auflösung ca. 1 bis 13 bit), welches geeignet digitalisiert bzw. quantisiert werden kann und zusammen mit dem ersten Winkelsignal des Paares von Hall-Sensoren 20, 22 zu einem hoch aufgelösten Winkelsignal als Ausgangssignal der Gesamtvorrichtung verrechnet bzw. kombiniert wird, so dass eine Maximalauflösung von 26 bit pro Umdrehung als Absolutsignal erreicht werden kann. Genauer gesagt sorgt die winkelstarre und damit fixierte Relativposition der ersten Scheibe 16 und der zweiten Scheibe 14 dafür, dass auch zwischen diesen beiden elektrischen Ausgangssignalen ein fester relativer Zusammenhang besteht, so dass zur Verbesserung der Ausgangsqualität des Gesamtsignals die Kombination erfolgen kann.

Geeignet aufbereitet und digitalisiert erfolgt dann die Übertragung über das schematisch gezeigte Signalkabel 12 aus dem Gehäuse 10, gängige Signalprotokolle sind etwa BIS oder SSI.

Die vorliegende Erfindung ist nicht auf die beschriebene Ausführungsform beschränkt; so sind beliebige Varianten der dargestellten Konfiguration denkbar, begonnen mit der Magnetisierung der beteiligten Scheiben 14, 16 über die Gehäuseform bis zum Einsatz und zur Verschaltung der jeweils verwendeten Magnetfelddetektoren.

## Patentansprüche

1. Vorrichtung zur rotativen Winkelmessung mit einer exzentrisch auf einer Rotationsachse (24) gelagerten Scheibe (16) als Steuerscheibe aus magnetisch leitendem Material, die zum berührungslosen magnetischen Zusammenwirken mit einer Mehrzahl von extern der Scheibe vorgesehenen ersten Magnetfelddetektoren (20, 22) ausgebildet und angeordnet ist,
die jeweils einen Bias-Magneten aufweisen und zum Erzeugen eines elektronisch auswertbaren, durch einen Abstand zwischen der Scheibe und einem jeweiligen der ersten Magnetfelddetektoren bestimmten ersten Winkelsignals eingerichtet sind,
**dadurch gekennzeichnet, dass**
auf der Rotationsachse der Steuerscheibe (16) benachbart eine zumindest randseitig inhomogen magnetisierte zweite Scheibe (14) konzentrisch vorgesehen, mit der Steuerscheibe winkelstabil um die Rotationsachse verbunden und zum berührungslosen magnetischen Zusammenwirken mit einem zweiten Magnetfelddetektor (18) ausgebildet ist,
wobei ein elektronisches Signal des zweiten Magnetfelddetektors zum Erzeugen eines zweiten Winkelsignals in Form eines eine Winkelauflösung des ersten Winkelsignals erhöhenden Ausgangssignals der Vorrichtung, auswert- und verarbeitbar ist.

2. Vorrichtung nach Anspruch 1, **dadurch gekennzeichnet, dass** die ersten Magnetfelddetektoren zwei in einem umfangsmäßigen 90°-Winkel zueinander angeordnete Hall-Sensoren (20, 22) sind, die bevorzugt zum Erzeugen eines sinus- bzw. kosinusförmigen ersten Winkelsignals beschaltet sind.

3. Vorrichtung nach Anspruch 1 oder 2, **dadurch gekennzeichnet, dass** der zweite Magnetfelddetektor (18) ein MR-Sensor ist.

4. Vorrichtung nach einem der Ansprüche 1 bis 3, **dadurch gekennzeichnet, dass** die ersten Magnetfelddetektoren und der zweite Magnetfelddetektor in ein gemeinsames Sensorgehäuse (10) integriert sind.

5. Vorrichtung nach Anspruch 4, **dadurch gekennzeichnet, dass** das Sensorgehäuse eine Auswerteelektronik für das erste und das zweite Winkelsignal sowie das Ausgangssignal der Vorrichtung und bevorzugt eine digitale Schnittstellenelektronik aufweist.

6. Vorrichtung nach einem der Ansprüche 1 bis 5, **dadurch gekennzeichnet, dass** das Sensorgehäuse zum berührungslosen seitlichen Zusammenwirken mit der Steuerscheibe (16) und der zweiten Scheibe (14) ausgebildet ist und einen einem Umfangsradius der Steuerscheibe und/oder der zweiten Scheibe folgendem gekrümmten oder abgewinkelten Gehäuseabschnitt (11) aufweist.

7. Vorrichtung nach einem der Ansprüche 4 bis 6, **dadurch gekennzeichnet, dass** das Sensorgehäuse drahtlos oder über ein Signalkabel (12) mit nachgeschalteten Aggregaten verbindbar ist.

8. Vorrichtung nach einem der Ansprüche 4 bis 7, **dadurch gekennzeichnet, dass** einer der ersten Magnetfelddetektoren sowie der zweite Magnetfelddetektor in axialer Richtung der Rotationsachse im Sensorgehäuse zueinander benachbart angeordnet sind.

9. Vorrichtung nach einem der Ansprüche 1 bis 8, **dadurch gekennzeichnet, dass** die zweite Scheibe randseitig eine periodische, insbesondere sinusförmige oder digitale, Codierung als inhomogene Magnetisierung aufweist.

10. Verwendung der Vorrichtung nach einem der Ansprüche 1 bis 9 zur Rotationsmessung einer Antriebswelle einer maschinellen Antriebseinheit, insbesondere für eine Werkzeugmaschine, eine Druck- oder Textilmaschine.

## Claims

1. An apparatus for rotary angle measurement with a disc (16), mounted eccentrically on a rotation axis (24), as a control disc of magnetically conductive material, which is constructed and arranged for contactless magnetic interaction with a plurality of first magnetic field detectors (20, 22) provided externally to the disc,
which respectively have a bias magnet and are arranged for generating a first angle signal, which is able to be evaluated electronically, determined by a distance between the disc and a respective one of the first magnetic field detectors,
**characterized in that**
adjacent on the rotation axis of the control disc (16), a second disc (14), magnetized at least on the edge side non-homogeneously, is provided in a concentric manner, is connected with the control disc in an angularly stable manner around the rotation axis and is constructed for contactless magnetic interaction with a second magnetic field detector (18),
wherein an electronic signal of the second magnetic field detector for generating a second angle signal in the form of an output signal of the device, increasing an angular resolution of the first angle signal, is able to be evaluated and processed.

2. The apparatus according to Claim 1, **characterized in that** the first magnetic field detectors are two Hall sensors (20, 22) arranged in a circumferential 90° angle to one another, which are preferably connected for generating a sine- or respectively cosine first angle signal.

3. The apparatus according to Claim 1 or 2, **characterized in that** the second magnetic field detector (18) is an MR sensor.

4. The apparatus according to one of Claims 1 to 3, **characterized in that** the first magnetic field detectors and the second magnetic field detector are integrated into a shared sensor housing (10).

5. The apparatus according to Claim 4, **characterized in that** the sensor housing has evaluation electronics for the first and the second angle signal and the output signal of the apparatus and preferably digital interface electronics.

6. The apparatus according to one of Claims 1 to 5, **characterized in that** the sensor housing is constructed for contactless lateral interaction with the control disc (16) and the second disc (14) and has a curved or angled housing section (11) following a circumferential radius of the control disc and/or of the second disc.

7. The apparatus according to one of Claims 4 to 6, **characterized in that** the sensor housing is able to be connected wirelessly or via a signal cable (12) with downstream units.

8. The apparatus according to one of Claims 4 to 7, **characterized in that** one of the first magnetic field detectors and the second magnetic field detector are arranged in the sensor housing adjacent to one another in axial direction of the rotation axis.

9. The apparatus according to one of Claims 1 to 8, **characterized in that** the second disc has on the edge side a periodic, in particular sinusoidal or digital, coding as non-homogeneous magnetization.

10. A use of the apparatus according to one of Claims 1 to 9 for the rotation measurement of a drive shaft of a mechanical drive unit, in particular for a machine tool, a printing machine or textile machine.

## Revendications

1. Dispositif de mesure d'angle de rotation avec un disque (16) logé de manière excentrique sur un axe de rotation (24), en tant que disque de commande en une matière à conduction magnétique qui est conçu et placé pour une interaction magnétique sans contact avec une pluralité de premiers détecteurs (20, 22) de champ magnétique prévus en externe du disque,
qui comportent chacun un aimant de polarisation et qui sont installés pour créer un premier signal d'angle électroniquement évaluable, déterminé par un écart entre le disque et l'un respectif des premiers détecteurs de champ magnétique,
**caractérisé en ce que**
sur l'axe de rotation, au voisinage du disque de commande (16), il est prévu de manière concentrique un deuxième disque (14) à magnétisation non homogène au moins sur le côté de son bord, relié en stabilité angulaire autour de l'axe de rotation avec le disque de commande et conçu pour une interaction magnétique sans contact avec un deuxième détecteur (18) de champ magnétique,
un signal électronique du deuxième détecteur de champ magnétique pour créer un deuxième signal d'angle sous la forme d'un signal de sortie du dispositif, augmentant une résolution angulaire du premier signal d'angle pouvant être évalué et traité.

2. Dispositif selon la revendication 1, **caractérisé en ce que** les premiers détecteurs de champ magnétique sont deux capteurs à effet Hall (20, 22) placés l'un par rapport à l'autre sous un angle périphérique de 90 °, qui sont connectés de préférence pour générer un premier signal d'angle sinusoïdal ou cosinusoïdal.

3. Dispositif selon la revendication 1 ou la revendication 2, **caractérisé en ce que** le deuxième détecteur (18) de champ magnétique est un capteur magnétorésistif.

4. Dispositif selon l'une quelconque des revendications 1 à 3, **caractérisé en ce que** les premiers détecteurs de champ magnétique et le deuxième détecteur de champ magnétique sont intégrés dans un boîtier de capteur (10) commun.

5. Dispositif selon la revendication 4, **caractérisé en ce que** le boîtier de capteur comporte une électronique d'évaluation pour le premier signal d'angle et le deuxième signal d'angle, ainsi que le signal de sortie du dispositif et de préférence une électronique d'interface numérique.

6. Dispositif selon l'une quelconque des revendications 1 à 5, **caractérisé en ce que** le boîtier de capteur est conçu pour une interaction latérale sans contact avec le disque de commande (16) et le deuxième disque (14) et comporte une partie de boîtier (11) curviligne ou coudée, suivant un rayon périphérique du disque de commande et/ou du deuxième disque.

7. Dispositif selon l'une quelconque des revendications 4 à 6, **caractérisé en ce que** le boîtier de capteur peut être relié sans fil ou via un câble de signalisation (12) avec des groupes montés en aval.

8. Dispositif selon l'une quelconque des revendications 4 à 7, **caractérisé en ce que** l'un des premiers détecteurs de champ magnétique, ainsi que le deuxième détecteur de champ magnétique sont placés en direction axiale de l'axe de rotation dans le boîtier de capteur, au voisinage l'un de l'autre.

9. Dispositif selon l'une quelconque des revendications 1 à 8, **caractérisé en ce que** le deuxième disque comporte du côté de son bord un codage périodique, notamment sinusoïdal ou numérique, en tant que magnétisation non homogène.

10. Utilisation du dispositif selon l'une quelconque des revendications 1 à 9 pour mesurer la rotation d'un arbre primaire d'une unité motrice mécanique, notamment pour une machine-outil, une machine à imprimer ou une machine textile.
